# EUROPEAN PATENT APPLICATION

(11) **EP 4 050 546 A1**
(43) Date of publication of application: **31.08.2022**
(21) Application number: 22153362.3
(22) Date of filing: 26.01.2022
(51) Int. Cl.: G06Q 30/06

(54) **ORDER MANAGEMENT DEVICE, ORDER MANAGEMENT METHOD, AND ORDER PROCESSING SYSTEM**

(30) Priority: 25.02.2021 JP 2021028782
(71) Applicant: Toshiba TEC Kabushiki Kaisha, Tokyo 141-8562 (JP)
(72) Inventor: Shinjoh, Seiji, Shinagawa-ku, Tokyo 141-8562 (JP); Sawa, Hiroshi, Shinagawa-ku, Tokyo 141-8562 (JP); Saito, Yu, Shinagawa-ku, Tokyo 141-8562 (JP); Nakanishi, Atsushi, Shinagawa-ku, Tokyo 141-8562 (JP); Fukuda, Masashi, Shinagawa-ku, Tokyo 141-8562 (JP)
(74) Representative: Bandpay & Greuter

(57) **Abstract**

An order management device is connectable to a store station device and order receiving servers operated by an order receiving agent for sending customer orders to a store. A processor of the order management device acquires first order data in different formats from the plurality of order receiving servers then generates corresponding second order data in a format matching a data format used by the store station device. The second order data is then transmitted to the store station device via a communication interface. The processor also sends a preparation completion notice to an order receiving server after receiving a notice of completion of preparation work from the store station device.

## Description

### FIELD

Embodiments of the present disclosure relate generally to an order management device, an order management method, and an order processing system.

### BACKGROUND

Web-based services (referred to in the following as "order receiving agent services") that receive orders related to provision of commodities such as food from stores such as restaurants may provide various additional services such as a food delivery service or the like. For some stores, several different order receiving agent services might be used simultaneously.

For use of such order receiving agent services, often dedicated terminals might be installed in stores and it is these dedicated terminals receive notifications related to incoming orders or the like. Therefore, for those stores using multiple order receiving agent services at the same time, it is generally necessary to install a separate dedicated terminal for each of the order receiving agent services.

Therefore, space occupied by dedicated terminals may begin to impinge on the space necessary for store staff to perform other functions or the like.

In view of such issues, it is desirable to make the use of a plurality of order receiving agent services more convenient for stores.

### BRIEF DESCRIPTION OF DRAWINGS

FIG. 1 is a diagram of an order processing system according to an embodiment.
FIG. 2 is a block diagram of an order management server.
FIG. 3 is a diagram schematically illustrating a data structure for management data stored in an order receiving data area.
FIG. 4 is a block diagram of an order receiving server.
FIG. 5 is a block diagram of a store station.
FIG. 6 is a diagram schematically illustrating aspects related to order management data stored in an order data area.
FIG. 7 is a flowchart illustrating aspects of information processing by a processor of a store station.
FIG. 8 is a flowchart illustrating aspects of information processing by a processor of a store station.
FIG. 9 is a flowchart illustrating aspects of information processing by a processor of an order management server.

### DETAILED DESCRIPTION

The invention is set out in the appended set of claims.

In general, according to embodiments, there are provided an order management device, an order management method, and an order processing system that make the concurrent use of a plurality of order receiving agent services at a store more convenient.

According to one embodiment, an order management device includes a communication interface and processor. The communication interface is connectable to a store station device and a plurality of order receiving servers. Each order receiving server can be operated by a different order receiving agent and used for sending customer orders to a store operating the store station device. The processor is configured to acquire first order data in different formats from the order receiving servers. The first order data includes a list of item codes being ordered by a customer from the store. The processor associates the first order data to a first order identifier, a system identifier identifying which one of the order receiving servers sent the first order data, and a second order identifier for identifying the first order data in the store station device. The processor extracts data elements corresponding to the list of item codes included in the first order data, and then generates second order data including the extracted data elements in a format matching a data format used by the store station device. The processor then transmits the second order data to the store station device via the communication interface. The processor also transmits a preparation completion notice to an order receiving server after receiving a notice of completion of preparation work including the second order identifier from the store station device.

Hereinafter, one or more example of embodiments will be described with reference to the drawings. In these example embodiments, an order processing system that processes an order for a commodity such as cooked food from a restaurant including an in-person dining room or the like will be described as an example. Cooking of food is one example of preparation work associated with provision a commodity to a consumer, end user, or the like. Such preparation work is not limited to cooking and may be, for example, any confirmation work related to order receiving, packaging of the commodity, or procurement of food materials before cooking. While cooked food is presented as the representative example, in some embodiments the commodity may be pre-made or previously prepared items such as grocery type items or the like. That is, the commodity types which ordered via the order processing system is not limited to cooked food and the store providing such a commodity is not limited to a restaurant. Although the representative store is a sit-down style restaurant, the restaurant may instead be a specialized takeout type store, a dedicated takeout kitchen, or the like.

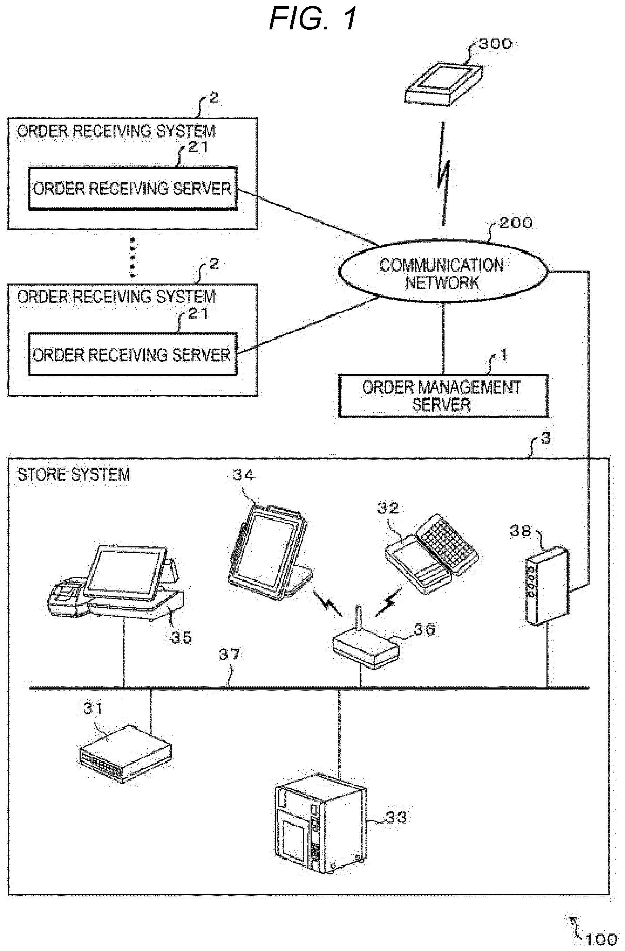

FIG. 1 is a diagram illustrating an overall configuration of an order processing system 100 according to an embodiment.

The order processing system 100 includes an order management server 1, a plurality of order receiving systems 2, and a store system 3. In some examples, the order processing system 100 may include a plurality of store systems 3. The order management server 1 can communicate with the order receiving systems 2 and the store system 3 via a communication network 200. As the communication network 200, the Internet and/or a mobile communication network are typically used. In some examples, the communication network 200 may comprise the Internet, a mobile communication network, a local area network (LAN), a virtual private network (VPN), a public communication network, or the like singly or in appropriate combination.

For orders received by the order receiving systems 2, the order management server 1 collects and manages data transmitted in an individual format (e.g., an order system specific format) from each order receiving system 2. The transmitted data corresponds to one or more orders (customer orders) received via an order receiving system 2 and is referred to in the present context as first order receiving data. The order management server 1 acts as a relay service for relaying data/information between the order receiving systems 2 on one side and the store system 3 on the other side. The order management server 1 generates order data (referred to in the present context as second order receiving data) in a format appropriate for handling by the store system 3. The second order receiving data is generated by the order management server 1 based on the first order receiving data (sent from individual order receiving systems 2). The second order receiving data is sent to the store system 3. The order management server 1 is an example of an order management device.

Each of the order receiving systems 2 can be run by a different service provider that provides an individual order receiving agent service. Therefore, the various configurations and order output formats of the plurality of order receiving systems 2 are typically different from each other. The plurality of order receiving systems 2 each include an order receiving server 21 that provides order receiving agent services. However, information processing executed by these order receiving servers 21 is different for each individual order receiving agent service.

The store system 3 is installed in a store such as a restaurant. The store system 3 may also be referred to as a restaurant point-of-sale (POS) system.

The store system 3 includes a store station 31, a hand-held terminal 32 ("handy" terminal 32), a statement printer 33, a kitchen terminal 34, a point-of-sale (POS) terminal 35, a wireless router 36, a communication network 37, and a gateway 38. In the example in FIG. 1, only a single store station 31, handy terminal 32, statement printer 33, POS terminal 35, and wireless router 36 are illustrated, but any number thereof can be incorporated in the store system 3.

The store system 3 is configured such that the store station 31, the handy terminal 32, the statement printer 33, the kitchen terminal 34, and the POS terminal 35 can communicate with each other via the communication network 37. The handy terminal 32 and the kitchen terminal 34 are connected to the communication network 37 via the wireless router 36. However, in some examples, the handy terminal 32 and the kitchen terminal 34 may be connected directly to the communication network 37 by a wired connection rather than wireless communication. In some examples, the store station 31, the statement printer 33, and the POS terminal 35 may be connected to the communication network 37 via the wireless router 36.

The store station 31 manages/tracks orders which may be sent from either the order management server 1 or the handy terminal 32.

The handy terminal 32 is a type of order input terminal that receives orders placed in person at the store. In this example, the handy terminal 32 is carried by a member of the store staff and is operated by the store staff.

The statement printer 33 can be installed at the store reception stand, a checkout counter, or in the kitchen. The statement printer 33 installed at the reception stand can print an order statement for a customer. That is, the statement printer 33 installed at the reception stand is a so-called customer printer. The statement printer 33 installed in the kitchen prints a cooking statement (order list) for a cook. That is, the statement printer 33 installed in the kitchen is a so-called a kitchen printer.

The kitchen terminal 34 can be installed in the kitchen or the like. The kitchen terminal 34 displays a screen used for a cook or the like to check the orders being managed by the store station 31. The kitchen terminal 34 is used for the cook or the like to input various instructions or responses to the store station 31.

The POS terminal 35 is installed at, for example, the reception stand or a checkout counter. The POS terminal 35 performs information processing related to various kinds of work such as provision of an ordering guide for a customer, menu service, customer order reception, a waiter request, a tray service, and payment processing. A POS terminal 35 installed at the reception stand primarily performs information processing related to order input and customer requests. A POS terminal 35 installed at the checkout counter further performs information processing related to payment processing. In some examples, a POS terminal 35 may be specialized for a specific task such as order input or payment processing.

The wireless router 36 permits wireless communication with the kitchen terminal 34 and the handy terminal 32 or other devices that have wireless communication functionality, and enables such devices to perform communication via the communication network 37.

The communication network 37 can be a LAN in a typical example. However, in general, any type of communication network such LAN, the Internet, a VPN, a public communication network, a mobile communication network, or the like can be used singly or in appropriate combination as the communication network.

In the present example, gateway 38 connects the communication network 37 to the communication network 200.

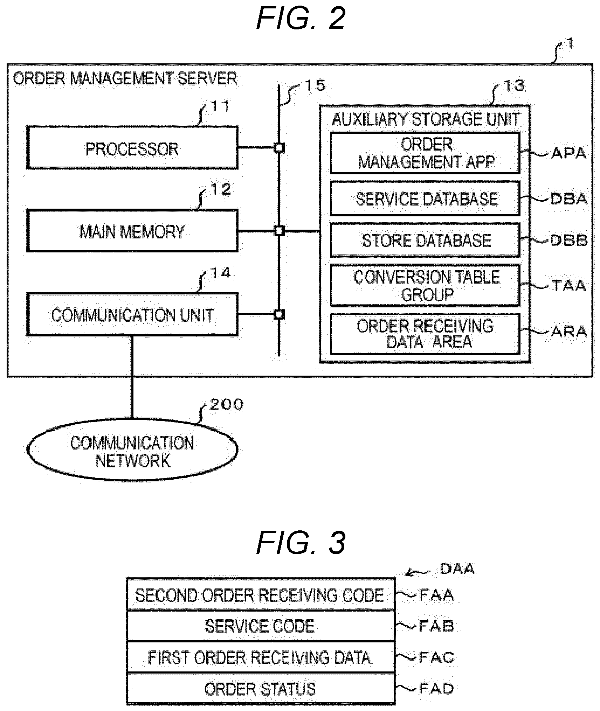

FIG. 2 is a block diagram of the order management server 1.

The order management server 1 includes a processor 11, a main memory 12, an auxiliary storage unit 13, a communication unit 14, and a transmission path 15 (bus). The processor 11, the main memory 12, the auxiliary storage unit 13, and the communication unit 14 are connected via a transmission path 15.

The processor 11, the main memory 12, and the auxiliary storage unit 13 are a computer in this example.

The processor 11 performs information processing to realize various functions of the order management server 1 in accordance with information processing programs such as an operating system, middleware, and an application program.

The main memory 12 includes a nonvolatile memory area and a volatile memory area. The main memory 12 stores the information processing program in the nonvolatile memory area. The main memory 12 stores data necessary for the processor 11 to perform a process of controlling each unit. The main memory 12 uses the volatile memory area as a work area in which the processor 11 can appropriately rewrite data.

As the auxiliary storage unit 13, for example, known storage devices such as an electric erasable programmable read-only memory (EEPROM), a hard disc drive (HDD), and a solid state drive (SSD) can be applied singly or in combination. The auxiliary storage unit 13 stores data used for the processor 11 to perform various processes or data generated in a process by the processor 11. The auxiliary storage unit 13 stores information processing programs. One of the information processing programs stored in the auxiliary storage unit 13 is an application program APA (hereinafter referred to as an order management app APA) that describes a procedure of information processing for realizing a function of the order management server 1. Parts of the storage area of the auxiliary storage unit 13 are used as a service database DBA, a store database DBB, a conversion table group TAA, and an order receiving data area ARA

The service database DBA is a set of data records including various kinds of information associated with order receiving agent services provided by the plurality of order receiving systems 2. The data records of the service database DBA include at least service codes serving as identifiers of the particularly associated order receiving agent services. In addition, the data records of the service database DBA can include additional information such as addresses for transmitting data to the order receiving server 21.

The store database DBB includes data records including various kinds of information associated with the store in which the store system 3 is provided. When the order management server 1 provides a relay service for a plurality of stores, the store database DBB includes data records associated with each of the plurality of stores. The data records of the store database DBB include at least store codes (hereinafter referred to as second store code) used by the order management server 1 to specifically identify the associated stores. In addition, the data records of the store database DBB can include additional information such as addresses for transmitting data to the order receiving server 21.

The conversion table group TAA is a set of conversion tables each associated with a particular combination of one of the order receiving systems 2 and one of the store systems 3. The conversion table includes a store code (hereinafter referred to as a first store code) for identifying the particular store for the particular order receiving system 2 and a second store code (that is, the store identifier for the particular store as used by the order management server 1). In the conversion table, commodity codes (hereinafter referred to as first commodity codes) serving as identifiers of particular menu items as used in the order receiving system 2 are correlated to corresponding commodity codes (hereinafter referred to as second commodity codes) as used in the store system 3.

In the order receiving data area ARA, management data for managing the first order receiving data acquired from an order receiving server 21 is stored. In the order receiving data area ARA, a plurality of pieces of management data can be stored.

The communication unit 14 performs a communication process of transmitting and receiving data via the communication network 200. As the communication unit 14, for example, a known communication device conforming with a communication standard of the communication network 200 can be used.

The transmission path 15 comprises an address bus, a data bus, and a control signal line and transmits data and control signals between the connected units.

The order management server 1 can use, for example, a general-purpose computer device as basic hardware. The order management app APA can be individually transferred to a computer device. The transfer of the order management app APA can be realized by being recorded on a removable recording medium such as a magnetic disk, a magneto-optical disc, an optical disc, or a semiconductor memory or downloaded via a network. In such a case, the processor 11 writes the order management app APA on the auxiliary storage unit 13 by an operation by an operator. The order management server 1 may be transferred in a state in which the order management app APA is already stored in the auxiliary storage unit 13. The order management app APA may be stored in the main memory 12 in some examples.

FIG. 3 is a diagram schematically illustrating a data structure of one piece of management data DAA stored in the order receiving data area ARA

The management data DAA includes fields FAA, FAB, FAC, and FAD In the field FAA, an order receiving code (hereinafter referred to as a second order receiving code) serving as an identifier for the order related to the first order receiving data in the store system 3 is set. In the field FAB, a service code of an order receiving agent service related to the first order receiving data is set. In the field FAC, the first order receiving data is set. In the field FAD, a status of the first order receiving data is set.

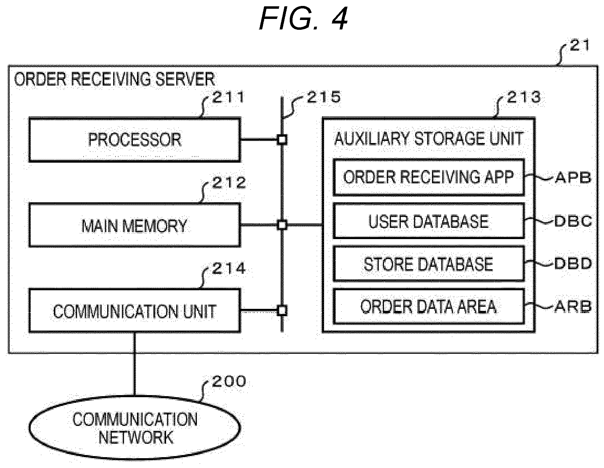

FIG. 4 is a block diagram of the order receiving server 21.

The order receiving server 21 includes a processor 211, a main memory 212, an auxiliary storage unit 213, a communication unit 214, and a transmission path 215. The processor 211, the main memory 212, the auxiliary storage unit 213, and the communication unit 214 are connected via the transmission path 215 (bus).

The processor 211, the main memory 212, and the auxiliary storage unit 213 are a computer in this example.

The processor 211 performs information processing to realize various functions of the order receiving server 21 in accordance with information processing programs such as an operating system, middleware, and an application program.

The main memory 212 includes a nonvolatile memory area and a volatile memory area. The main memory 212 stores the information processing program(s) in the nonvolatile memory area. The main memory 212 stores data necessary for the processor 211 to perform a process of controlling each unit. The main memory 212 uses the volatile memory area as a work area in which the processor 211 can appropriately rewrite data.

As the auxiliary storage unit 213, for example, known storage devices such as an EEPROM, an HDD, and an SSD can be applied singly or in combination. The auxiliary storage unit 213 stores data used for the processor 211 to perform various processes or data generated by the processor 211 while performing a process. The auxiliary storage unit 213 stores information processing programs, for example. One of the information processing programs stored in the auxiliary storage unit 213 is an application program APB (hereinafter referred to as an order receiving app APB) that describes a procedure of information processing for realizing a function of the order receiving server 21. Parts of the storage area of the auxiliary storage unit 213 are used as a user database DBC, a store database DBD, and an order data area ARB

The user database DBC is a set of data records which are associated with users of the order receiving agent service and include various kinds of information related to the users. The data records of the user database DBC include at least user codes serving as identifiers of the associated users. In addition, the data records of the user database DBC can include personal information and settlement information of users or appropriate data such as identifiers of communication terminals used for the users to use the order receiving agent service. The user codes may be individually determined by each order receiving agent service.

The store database DBD includes data records which are related to stores participating in the order receiving agent service and include various kinds of information related to such stores. When several stores have joined the order receiving agent service, then corresponding data records associated with each of the stores are included in the store database DBD. A data record of the store database DBD includes at least a store code ("first store code") used for the order receiving server 21 to identify the associated store. In addition, the data records of the store database DBD can include, for example, additional information such as the first commodity code related to items at the associated store. The first store code and the first commodity code may be individually determined by each order receiving agent service. That is, the first store code for a particular store may be different for each of a plurality of order receiving agent services. Likewise, the first commodity code for the same item at the same store may be different for each of the order receiving agent services.

In the order data area ARB, management data for managing content of an order received from a user is stored. In the order data area ARB, a plurality of pieces of management data can be stored.

The communication unit 214 performs a communication process of transmitting and receiving data via the communication network 200. As the communication unit 214, for example, a known communication device conforming with a communication standard of the communication network 200 can be used.

The transmission path 215 comprises an address bus, a data bus, and a control signal line and transmits data and control signals between connected units.

The order receiving server 21 can use, for example, a general-purpose computer device as basic hardware. Order receiving app APB can be individually transferred by being recorded on a removable recording medium such as a magnetic disk, a magneto-optical disc, an optical disc, or a semiconductor memory or downloaded via a network. In this case, the processor 211 writes the order receiving app APB on the auxiliary storage unit 213 through an operation by an operator. The order receiving server 21 may be transferred with order receiving app APB already stored in the auxiliary storage unit 213. In some examples, order receiving app APB may be stored in the main memory 12.

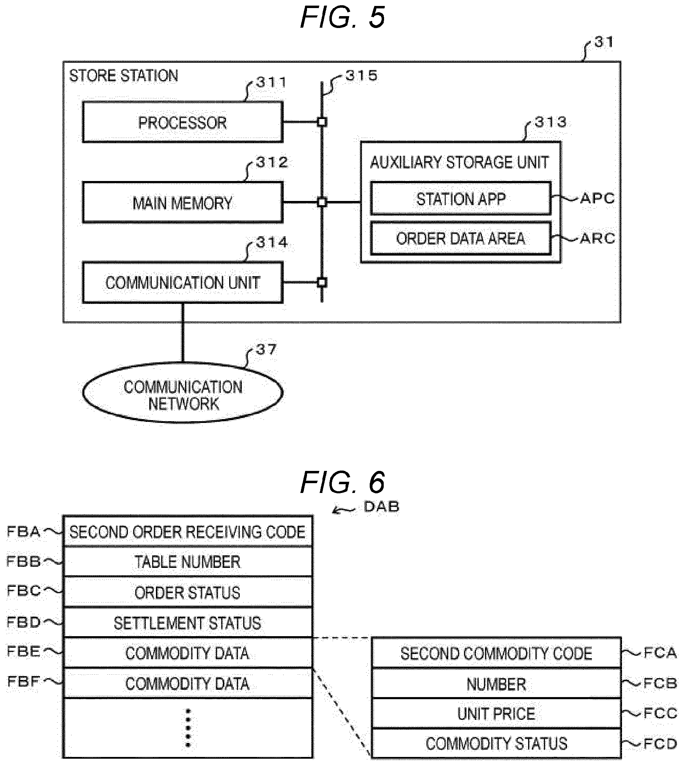

FIG. 5 is a block diagram illustrating of the store station 31.

The store station 31 includes a processor 311, a main memory 312, an auxiliary storage unit 313, a communication unit 314, and a transmission path 315.

The processor 311, the main memory 312, and the auxiliary storage unit 313 are a computer that performs information processing to realize the function of the store station 31.

The processor 311 performs the information processing based on information processing programs such as an operating system, middleware, and an application program stored in the main memory 312 or the auxiliary storage unit 313.

The main memory 312 includes a nonvolatile memory area and a volatile memory area. The main memory 312 stores the information processing program in the nonvolatile memory area. The main memory 312 stores data necessary for the processor 311 to perform a process of controlling each unit. The main memory 312 uses the volatile memory area as a work area in which the processor 311 can appropriately rewrite data.

The auxiliary storage unit 313 is, for example an EEPROM, an HDD, an SSD, or the like. The auxiliary storage unit 313 stores data used for the processor 311 to perform various processes or data generated in a process by the processor 311. The auxiliary storage unit 313 stores information processing programs in some cases.

The communication unit 314 performs a communication process of transmitting and receiving data via the communication network 37 by the processor 311.

The transmission path 315 comprises an address bus, a data bus, and a control signal line, and transmits data and control signals between connected units.

The auxiliary storage unit 313 stores a station app APC. The station app APC is an application program for information processing to realize an operation of the store station 31. As basic hardware of the store station 31, for example, a general-purpose information processing device can be used. Transfer of the store station 31 is generally performed with the station app APC already stored in the auxiliary storage unit 313. However, the station app APC may be separately transferred in some examples. The transfer of the station app APC can be realized by recording the station app APC on a removable recording medium such as a magnetic disk, a magneto-optic disc, an optical disc, or a semiconductor memory or by download via a network. The station app APC may be stored in the main memory 312 in some examples.

A part of the storage area of the auxiliary storage unit 313 is used as an order data area ARC for storing order management data. In the order data area ARC, a plurality of pieces of order management data can be stored.

FIG. 6 is a diagram schematically illustrating a configuration of one piece of order management data DAB stored in the order data area ARC.

The order management data DAB is associated with an order for a customer within one group or one order received by the order receiving system 2. The order management data DAB includes fields FBA, FBB, FBC, FBD, FBE, and FBF. The order management data DAB may also include additional fields subsequent to field FBF.

In the field FBA, the second order receiving code for identifying an associated order is set. The second order receiving code is also referred to as a statement code or the like. In the field FBB, a table number serving as an identifier for identifying a seat used by a customer with regard to the associated order is set. In the field FBC, an order status managed in the store station 31 for the associated order is set. In the field FBD, a settlement status of the associated order is set. In the field FBE, commodity data related to a particular item in the associated order is set. When an order includes a plurality of items, additional commodity data fields FBF for the associated order are utilized. Additional fields subsequent to field(s) FBF can be added to the order management data DAB.

The commodity data fields such as fields FBE and FBF each include fields FCA, FCB, FCC, and FCD. In the field FCA, the second commodity code is set. In the field FCB, an ordered number is set. In the field FCC, a unit price of the commodity is set. In the field FCD, a status for the ordered commodity (hereinafter referred to as a commodity status) is set.

In some examples, order management data DAB and the commodity data may not include, for example, some fields such as the field FBB or the field FCC. In other examples, order management data DAB and the commodity data may include fields which are not illustrated in FIG. 6 and, in general, any data may be set within order management data DAB according to operator preference(s) or the like.

Next, an operation of the order processing system 100 will be described. Content of various processes to be described below is for example, and a change in an order of some processes, omission of some processes, or addition of other processes can be appropriately made without departing from the present disclosure. In the following description, some processes might not be fully described in detail so as to facilitate description of feature operations according particularly to the embodiment. For example, when a certain error occurs, an error clearing or checking process can be performed to handle the error in some cases. These processes will not be further described.

When the store station 31 is in an operation state in which an order can be managed, the processor 311 performs information processing in accordance with the station app APC.

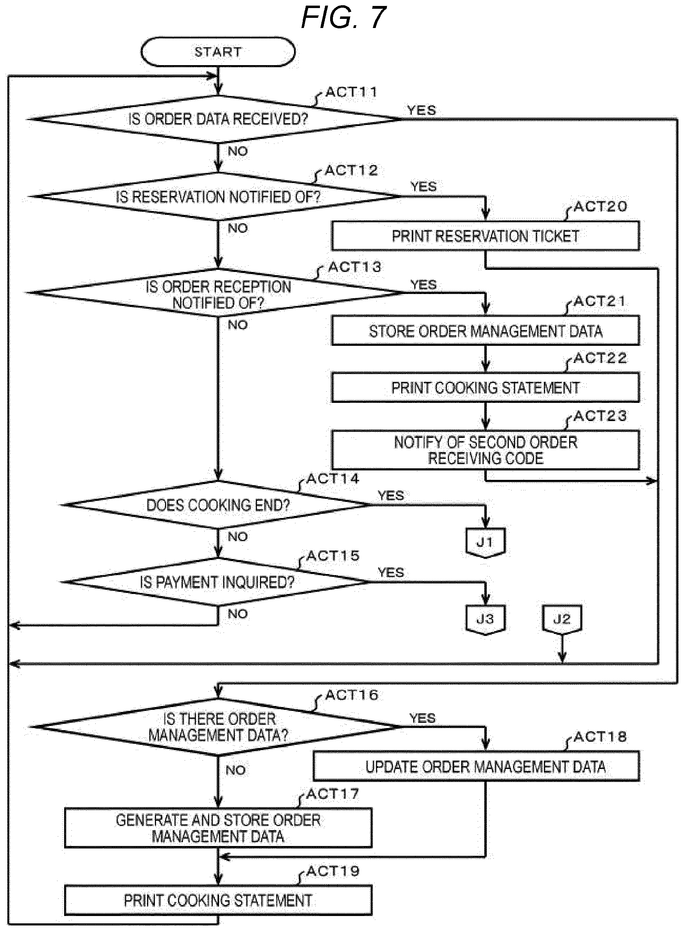

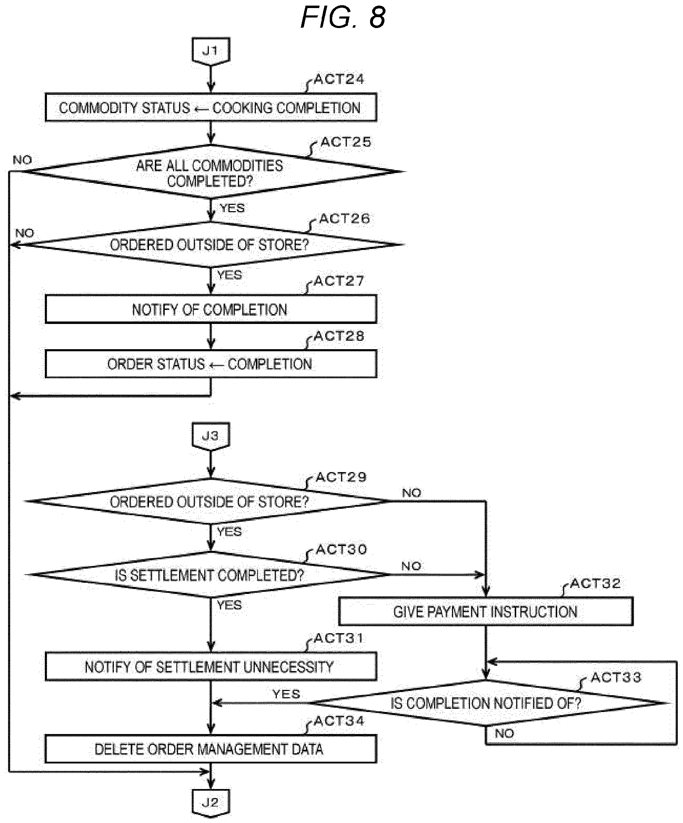

FIGS. 7 and 8 are flowcharts illustrating information processing by the processor 311.

In ACT11 of FIG. 7, the processor 311 checks whether order data transmitted from the handy terminal 32 is received. If not, the processor 311 determines NO and the process proceeds to ACT12.

In ACT12, the processor 311 checks whether a reservation notification is given from the order management server 1. If not, the processor 311 determines NO and the process proceeds to ACT13.

In ACT13, the processor 311 checks whether an order receiving notification is given from the order management server 1. If not, the processor 311 determines NO and the process proceeds to ACT14.

In ACT14, the processor 311 checks whether a notification indicating completion of cooking of an ordered commodity is given. If not, the processor 311 determines NO and the process proceeds to ACT15.

In ACT15, the processor 311 checks whether a payment inquiry is received from the POS terminal 35. If not, the processor 311 determines NO and the process returns to ACT11.

Thus, in ACT11 to ACT15, the processor 311 waits for occurrence of a reception of order data, a reservation notification, an order receiving notification, cooking end, or a payment inquiry.

An order of a customer in a store can be taken verbally by a store staff, then input to the handy terminal 32 through an operation by the store staff. The handy terminal 32 generates order data in response and transmits the order data to the store station 31 via the wireless router 36 and the communication network 37. The handy terminal 32 includes in the order data a table number allocated to a seat used by an ordering customer and the second commodity code of the ordered commodity item. When multiple instances of the same commodity type (that is, the same second commodity code) are ordered by the customer, the order data including this number in association with the corresponding second commodity code. That is, handy terminal 32 includes the number (ordered number) in the order data. When a plurality of commodities is ordered by the customer, the handy terminal 32 may transmit a plurality of pieces of order data respectively including the corresponding second commodity codes of the plurality of commodities ordered or may transmit one piece of order data including all the second commodity codes therein.

After the order data is transmitted to the store station 31 via the communication network 37, the communication unit 314 receives the order data. Thus, the processor 311 determines YES in ACT11 and the process proceeds to ACT16.

In ACT16, based on the order data, the processor 311 checks whether there is already order management data DAB to be updated is in the order data area ARC. The processor 311 searches for, for example, the order management data DAB in which the table number included in the order data is set in the field FBB from the order data area ARC. Then, if the corresponding order management data DAB is not found, the processor 311 determines NO and the process proceeds to ACT17.

In ACT17, the processor 311 generates new order management data DAB in the order data area ARC and stores the new order management data DAB in the order data area ARC. For example, the processor 311 sets the second order receiving code determined in accordance with a pre-decided rule in the field FBA of the new order management data DAB so that the second order receiving code is different from the second order receiving code of the order management data DAB already stored in the order data area ARC. For example, the processor 311 sets the table number included in the order data in the field FBB of the new order management data DAB. For example, the processor 311 sets the order status set in the field FBC of the new order management data DAB to a state indicating "non-completion." For example, the processor 311 sets a settlement status set in the field FBD of the new order management data DAB to a state indicating "non-completion." For example, the processor 311 includes the fields in which commodity data associated with the second commodity code included in the order data is set after the field FBE of the new order management data DAB. For example, the processor 311 sets the associated second commodity code in the field FCA of the commodity data. For example, the processor 311 sets a number in the field FCB of the commodity data when the number related to the associated second commodity code is included in the order data, and sets "1" when the number is not included in the order data. For example, the processor 311 sets a unit price of a commodity identified with the associated second commodity code in the field FCC of the commodity data. For example, the processor 311 acquires the unit price with reference to a commodity master database stored in the auxiliary storage unit 313 or any storage device equipped in another device such as a POS server (not illustrated). For example, the processor 311 sets the commodity status set in the field FCD of the commodity data to a state indicating an "order-finished state."

Conversely, if the processor 311 can find already existing order management data DAB in which the table number included in the order data is set in the field FBB, the processor 311 determines YES in ACT16 and the process proceeds to ACT18.

In ACT18, the processor 311 updates the found order management data DAB based on the newly received order data. For example, the processor 311 adds the field in which the commodity data associated with the commodity code included in the order data is set after the end field of the order management data DAB. When the process first proceeds to ACT18 and the end of the order management data DAB is the field FBE, the processor 311 adds the field FBF.

When the processor 311 completes processing of ACT17 or ACT18, the process proceeds to ACT19 in either case.

In ACT19, the processor 311 instructs the statement printer 33 to print a cooking statement. Thereafter, the processor 311 returns the process to a standby state of ACT11 to ACT15.

Additionally, when a user makes access via the communication network 200 using any communication terminal such as the portable terminal 300 illustrated in FIG. 1 and orders commodity provision in accordance with a pre-decided instruction (e.g., a dedicated customer ordering application), the processor 211 of the order receiving server 21 can also receive orders via this route. Then, the processor 211 manages content of the received order in a manner that may be similar to, for example, a process performed in a web server that provides a known order receiving agent service. The processor 211 generates the first order receiving data indicating the content of the order in a format determined for each order receiving system 2 and transmits the first order receiving data destined for the order management server 1 to the communication network 200. The processor 211 of each of the plurality of order receiving servers 21 includes the first order receiving code determined by the processor 211, the first store code related to a store of an order destination, the first commodity code and the number of ordered commodities, timing information, and settlement data in the first order receiving data. The processor 211 includes timing information indicating a reservation time in the first order receiving data when a user designates or requests a specific time at which a commodity is to be provided (hereinafter referred to as a reservation time), and includes timing information indicating "immediate" in the first order receiving data when the user does not designate a reservation time. When the order receiving system 2 is to perform settlement related to an order in accordance with a regulation of the order receiving agent service or the user designates settlement in the order receiving system 2, the processor 211 calculates a price of the received order and performs a settlement process of permitting the user to perform the settlement (payment) operation. When the processor 211 has performed the settlement process, the processor 211 includes data indicating "a settlement-finished state" as settlement data in the first order receiving data. However, when the processor 211 does not perform the settlement process, the processor 211 includes data indicating a settlement method as designated by the user as settlement data in the first order receiving data. Thus, when the processor 211 performs information processing based on the order receiving app APB, a computer that has the processor 211 as a central unit functions as second transmission means.

The processor 11 of the order management server 1 performs information processing in accordance with the order management app APA.

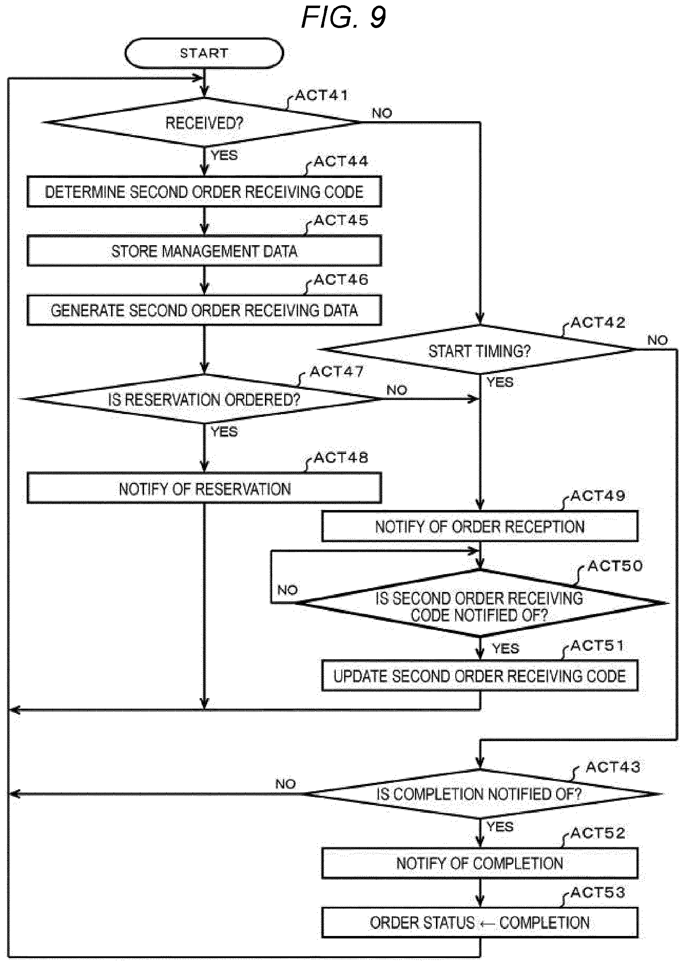

FIG. 9 is a flowchart illustrating information processing by the processor 11.

In ACT41, the processor 11 checks whether the first order receiving data is received. If not, the processor 11 determines NO and the process proceeds to ACT42.

In ACT42, the processor 11 checks whether a start timing with regard to any managed order arrives. If not, the processor 11 determines NO and the process proceeds to ACT43.

In ACT43, the processor 11 checks whether the store system 3 notifies of cooking completion. If not, the processor 11 determines NO and the process returns to ACT41.

Thus, in ACT41 to ACT43, the processor 11 waits for first order receiving data, a start timing to arrive, or cooking completion to be notified.

As described above, after the first order receiving data transmitted from the order receiving server 21 is transmitted to the order management server 1 via the communication network 200, the communication unit 14 receives the first order receiving data. In ACT41, the processor 11 determines YES and the process proceeds to ACT44.

In ACT44, the processor 11 determines the corresponding second order receiving code. For example, the processor 11 sets the second order receiving code so that the second order receiving code does not overlap with another second order receiving code already set in the field FAA of the management data DAA and already included in the order receiving data area ARA in accordance with a pre-decided rule.

In ACT45, the processor 11 stores the new management data DAA in the order receiving area ARA. The processor 11 sets the second order receiving code determined in ACT44 in the field FAA of this new management data DAA. The processor 11 sets a service code of the order receiving agent service to match the order receiving server 21 transmitting the first order receiving data in the field FAB of the new management data DAA. The processor 11 sets the first order receiving data in the field FAC of the new management data DAA. The processor 11 sets the order status set in the field FAD of the new management data DAA to a state indicating "non-completion." The processor 11 may store the first order receiving data in the main memory 12, the auxiliary storage unit 13, or any other storage device separately from the management data DAA and may set a file path of the first order receiving data in the management data DAA.

Thus, the processor 11 acquires the first order receiving data and stores the first order receiving data in the order receiving data area ARA That is, when the processor 11 performs information processing based on the order management app APA, a computer that has the processor 11 as a central unit functions as acquisition means. The processor 11 stores the management data DAA in the order receiving data area ARA, and thus manages the first order receiving data in association with the first order receiving code serving as a first order identifier, an identification code serving as a system identifier, and a second order receiving code serving as a second order identifier. That is, when the processor 11 performs information processing based on the order management app APA, a computer that has the processor 11 as a central unit functions as first management means.

In ACT46, the processor 11 generates the second order receiving data. For example, the processor 11 extracts all the first commodity codes from the first order receiving data along with the corresponding ordered number for each first commodity code. For example, the processor 11 selects a conversion table associated with the relevant combination of the order receiving system 2 )order receiving server 21) sending the first order receiving data and the particular store identified with the first store code included in the first order receiving data from the conversion tables included in the conversion table group TAA. For example, the processor 11 converts the first commodity codes into the corresponding second commodity codes based on the selected conversion table. In some examples, the processor 11 may omit this conversion when the order receiving server 21 transmitting the first order receiving data uses the same commodity codes as the store. For example, the processor 11 generates the second order receiving data as data indicating the combination of the second commodity code and the number obtained through the conversion, and a pre-decided table number by indicating an order from the outside of the store in the same format as the order data transmitted by the handy terminal 32. In this context, an order from the outside of the store is an order received by an order receiving system 2.

The processor 11 extracts the first commodity code and the corresponding ordered number as data elements included in the first order receiving data. That is, when the processor 11 performs information processing based on the order management app APA, a computer that has the processor 11 as a central unit functions as extraction means. The processor 11 generates the second order receiving data in which the extracted data element is included in a pre-decided format. That is, when the processor 11 performs information processing based on the order management app APA, a computer that has the processor 11 as a central unit functions as generation means.

In ACT47, the processor 11 checks whether the first order receiving data is related to a reservation order. A reservation order is an order in which a reservation time at which the commodity is to be provided is designated. For example, when timing information included in the first order receiving data indicates the reservation time, the processor 11 determines YES and the process proceeds to ACT48.

In ACT48, the processor 11 performs reservation notification on a store where a commodity is provided in response to the order. The reservation notification is a notification to the store indicating that the reservation order is received. For example, the processor 11 transmits reservation notification data including identification data for identifying the reservation notification, the second order receiving data, and the timing information included in the first order receiving data from the communication unit 14 to the communication network 200. The processor 11 sets a store identified with the second store code associated with the first store code included in the first order receiving data as a notification destination of the reservation notification in the conversion table selected in ACT46. That is, for example, the processor 11 sets an address included along with the second store code which is one of the data records included in the store database DBB as a destination of the reservation notification data. Thereafter, the processor 11 returns the process to a standby state of ACT41 to ACT43.

When the reservation notification data is transmitted to the store system 3 considered to be a destination via the communication network 200, the communication unit 314 provided in the store station 31 in the store system 3 receives the reservation notification data. Accordingly, the processor 311 determines YES in ACT12 in FIG. 7 and the process proceeds to ACT20.

In ACT20, the processor 311 prints a reservation ticket. For example, the processor 311 causes the statement printer 33 to print the reservation ticket indicating the reservation time and a target commodity of the reservation order based on the second order receiving data included in the reservation notification data. Thereafter, the processor 311 returns the process to the standby state of ACT11 to ACT15. The processor 311 may cause the kitchen terminal 34 to display a screen indicating the reservation time and the target commodity of the reservation order instead of or in addition to the printing of the reservation ticket. Alternatively, the processor 311 may store the reservation notification data or the second order receiving data included in the reservation notification data in the main memory 312 or the auxiliary storage unit 313 and may cause the kitchen terminal 34 to display the screen indicating the reservation time and the target commodity of the reservation order in response to a request from the kitchen terminal 34 at any subsequent timing.

In the order management server 1, the processor 11 determines NO in ACT47 (FIG. 9) and the process proceeds to ACT49 if the timing information included in the first order receiving data indicates "immediate." When the processor 11 is in the standby state of ACT41 to ACT43 and the reservation time indicated by the timing information included in the first order receiving data set in the field FAC that newly arrives is in the management data DAA included in the order receiving data area ARA, the processor 11 determines YES in ACT42 and the process proceeds to ACT49. When a current time passes the reservation time, the processor 11 may determine that a start timing has been reached. A time earlier by some predetermined amount before the actual reservation time, may be used by the processor 11 to determine the start timing. That is, as a timing at which cooking of the order will start, the start timing is determined by, for example, a generator of the order management app APA, an administrator of the order management server 1, or the like. Here, a timing at which cooking actually starts can be determined in accordance with various situations in the store and does not necessarily coincide with the start timing.

In ACT49, the processor 11 performs an order receiving notification to the store where the commodity is provided in response to the order. The order receiving notification is a notification to the store indicating that cooking based on the order is necessary. For example, the processor 11 transmits the order receiving notification data including the second order receiving data, the settlement data, and the identification data for identifying the order receiving notification from the communication unit 14 to the communication network 200. Thus, when the processor 11 performs information processing based on the order management app APA, a computer that has the processor 11 as a central unit functions as first transmission means. For example, when the processor 11 determines NO in ACT47 and the process proceeds to ACT49, the store identified by the second store code associated with the first store code included in the first order receiving data is set as a notification destination of the reservation notification in the conversion table selected in ACT46, and the settlement data included in the received first order receiving data immediately before is included in the order receiving notification data. Conversely, when the processor 11 determines YES in ACT42 and the process proceeds to ACT49, the processor 11 selects a conversion table associated with a combination of the order receiving system 2 (order receiving server 21) transmitting the first order receiving data including the timing information triggering the determination of YES in ACT42 belongs and the store identified with the first store code included in the first order receiving data from the plurality of conversion tables included in the conversion table group TAA. For example, the processor 11 sets the store identified with the second store code associated with the first store code included in the first order receiving data as the notification destination of the reservation notification in the selected conversion table. When the processor 11 determines YES in ACT42 and the process proceeds to ACT49, the processor 11 includes the settlement data included in the first order receiving data including timing information triggering determination of YES in ACT42 in the order receiving notification data.

When the order receiving notification data is transmitted via the communication network 200 to the store system 3 considered to be a destination, the communication unit 314 provided in the store station 31 in the store system 3 receives the order receiving notification data. Accordingly, the processor 311 determines YES in ACT13 in FIG. 7 and the process proceeds to ACT21.

In ACT21, the processor 311 generates the new order management data DAB based on the received order receiving notification data and stores the new order management data DAB in the order data area ARC. For example, the processor 311 generates the new order management data DAB as in ACT 17 based on the second order receiving data included in the order receiving notification data. Here, for example, the processor 311 sets the settlement data included in the order receiving notification data in the filed FBD of the new order management data DAB. The processor 311 determines the second order receiving code as in ACT17, but this may be omitted and the second order receiving code determined by the processor 11 may be set in the field FBA of the new order management data DAB. In this case, the determination of the second order receiving code by the processor 11 in ACT44 in FIG. 9 is made so as not to overlap with the second order receiving code determined by the processor 211. The processor 11 includes the second order receiving code determined by the processor 11 in ACT44 in the order receiving notification data.

The processor 311 stores the order management data DBA in the order data area ARC to manage the second order receiving data in association with the second order receiving code serving as the second order identifier. That is, when the processor 311 performs information processing based on the station app APC, a computer that has the processor 311 as a central unit functions as second management means.

In ACT22, the processor 311 prints a cooking statement as in ACT19, for example.

In ACT23, the processor 311 notifies the order management server 1 of the second order receiving code determined in ACT21. For example, the processor 311 transmits the code notification data which includes the second order receiving code and the identification data for identifying a notification of the second order receiving code and is destined to the order management server 1 from the communication unit 314 to the communication network 37. Thereafter, the processor 311 returns the process to the standby state of ACT 11 to ACT15.

In the order management server 1, after the processor 11 performs the order receiving notification in ACT49 in FIG. 9, the process proceeds to ACT50.

In ACT50, the processor 11 waits for a notification of the second order receiving code. When the code notification data transmitted from the store station 31 is transmitted to the order management server 1 via the communication network 37, the gateway 38, and the communication network 200 and is received by the communication unit 14, as described above, the processor 11 determines YES and the process proceeds to ACT51.

In ACT51, the processor 11 updates the second order receiving code set in the field FAA of the management data DAA stored in the order receiving data area ARA in ACT45 to the second order receiving code included in the code notification data. Thereafter, the processor 11 returns the process to the standby state of ACT41 to ACT43.

As described above, when the second order receiving code determined by the processor 11 in ACT44 is set in the field FBA of the order management data DAB, the process of ACT23 (FIG. 7) by the processor 311 and the processes of ACT50 and ACT51 in FIG. 9 by the processor 11 can be omitted.

A cook checks order content based on a cooking statement printed by the statement printer 33 and cooks an ordered item or items. When the cooking ends, the cook or another store staff notifies the store station 31 of completion of the cooking in accompaniment with a notification of a certain commodity of a certain order. This notification is performed by, for example, the handy terminal 32 or the kitchen terminal 34 in response to an operation of the cook or the other store staff. When the completion of the cooking is notified of in this way, the processor 311 determines YES in ACT14 (FIG. 7) and the process proceeds to ACT24 (FIG. 8).

In ACT24, the processor 311 changes the commodity status related to the commodity to "cooking end." For example, the processor 311 finds the order management data DAB associated with the notified order from the order data area ARC. Then, the processor 311 changes the commodity status set in the field FCD of the commodity data associated with the commodity of which the cooking end is notified in the commodity data included in the corresponding order management data DAB to a state indicating "cooking end."

In ACT25, the processor 311 checks whether cooking of all the ordered items is completed. For example, when the commodity status set in the field FCD indicates "cooking end" in all the commodity data included in the order management data DAB found in ACT24, the processor 311 determines YES and the process proceeds to ACT26.

In ACT26, the processor 311 checks whether the completed order is an order from the outside of the store after the cooking end. For example, when the table number set in the field FBB of the order management data DAB found in ACT24 is a pre-decided table number (e.g., a dummy table number value) indicating an order from the outside of the store, the processor 311 determines YES and the process proceeds to ACT27.

In ACT27, the processor 311 notifies the order management server 1 of the cooking completion. For example, the processor 311 transmits the first completion notification data which includes the second order receiving code and the identification data for identifying a completion notification to the order management server 1 from the communication unit 314. Thus, when the processor 311 performs information processing based on the station app APC, a computer that has the processor 311 as a central unit functions as second notification means.

In ACT28, the processor 311 changes the order status of the order for which the cooking of all the commodities is completed to "completion" at the cooking end. For example, the processor 311 updates the order status set in the field FBC of the order management data DAB found in ACT24 to a state indicating "completion." Thereafter, the processor 311 returns the process to the standby state of ACT11 to ACT15 in FIG. 7.

In the order management server 1, when the first completion notification data transmitted from the store station 31 is transmitted to the order management server 1 via the communication network 37, the gateway 38, and the communication network 200 and is received by the communication unit 14, as described above, the processor 11 determines YES in ACT43 (FIG. 9) and the process proceeds to ACT52.

In ACT52, the processor 11 notifies the relevant order receiving server 21 that the cooking is completed. For example, the processor 11 finds the management data DAA in which the second order receiving code included in the received first completion notification data is set in the field FAA from the order receiving data area ARA. For example, the processor 11 transmits the second completion notification data including the first order receiving code included in the first order receiving data set in the field FAC of the corresponding management data DAA along with the identification data for identifying the completion notification from the communication unit 14 to the communication network 200. For example, the processor 11 sets an address associated with the service code set in the field FAC of the management data DAA in the service database DBA as a destination of the second completion notification data. Thus, when the processor 11 performs information processing based on the order management app APA, a computer that has the processor 11 as a central unit functions as first notification means.

In ACT53, the processor 11 changes the order status of the order to "completion." For example, the processor 11 updates the order status set in the field FAD of the management data DAA found in ACT52 to a state indicating "completion." Thereafter, the processor 11 returns the process to the standby state of ACT41 to ACT43.

In the order receiving server 21, when the second completion notification data transmitted from the order management server 1 is transmitted to the order receiving server 21 and is received by the communication unit 214, the processor 211 requests the user or a delivery person to pickup the completed order. That is, when it is determined that the delivery person is to deliver the order in accordance with regulations of an order receiving agent service 2 or otherwise the delivery of the order by a delivery person has been designated by the ordering user, the processor 211 requests the delivery person to pickup the order from the store. When it is determined that the user is himself/herself to go to the store and pickup the completed order in accordance with a regulation of the order receiving agent service 2, the processor 211 requests the user to pickup the order at the store. For example, the request is realized by displaying a screen on the portable terminal 300 carried by the delivery person or by displaying a screen on the portable terminal 300 carried by the user. Specifically, for example, the processor 211 outputs data regarding a message for making a request for taking over the commodity in the store to the portable terminal 300. For example, the portable terminal 300 receives the data and displays the message on the screen. The delivery person or user who has received the request goes to the store and informs a store staff of a report to take the order. In response to the report from the delivery person or the user, the store staff gives an instruction for payment inquiry about the order being pickup by performing, for example, a pre-decided operation in the POS terminal 35.

Conversely, when the cooking ends with regard to an in-person order, the store staff provides the commodity to the customer at the store. In such a case, settlement for the order may be performed at the POS terminal 35 when the customer is to leave the store rather than upon providing of the order to the customer.

The operation of giving the payment inquiry by the store staff is assumed to be, for example, an operation of reading a barcode indicating the second order receiving code with the POS terminal 35. In this case, for example, the processor 311 of the store station 31 may cause the statement printer 33 to print a statement indicating the barcode before or after the cooking statement is printed in ACT19 and the store staff may give the statement to the customer. When the processor 311 determines YES in ACT26, the processor 311 may cause the statement printer 33 to print the statement indicating the barcode and attach the statement to the commodity.

When the payment inquiry is instructed, as described above, the POS terminal 35 performs the payment inquiry to the store station 31 in accompaniment with the notification of the second order receiving code.

In the store station 31, when the payment inquiry is received, the processor 311 determines YES in ACT15 in FIG. 7 and the process proceeds to ACT29 in FIG. 8.

In ACT29, the processor 311 checks whether an inquiry target order is an order from the outside of the store. For example, the processor 311 finds the order management data DAB in which the second order receiving code notified at the time of the payment inquiry is set in the field FBA from the order data area ARC. When the table number set in the field FBB of the corresponding order management data DAB is a pre-decided table number indicating the order is from outside of the store, the processor 311 determines YES and the process proceeds to ACT30.

In ACT30, the processor 311 checks whether payment of the inquiry target order is finished. For example, when the settlement status set in the field FBD of the order management data DAB found in ACT29 is a state indicating "settlement-finished state," the processor 311 determines YES and the process proceeds to ACT31.

In ACT31, the processor 311 notifies the POS terminal 35 that further settlement operations are unnecessary. The POS terminal 35 receiving this notification displays a pre-decided screen to inform the store staff of settlement unnecessary. The store staff confirms the settlement is unnecessary on the screen, and then hands the commodity to the delivery person or the customer.

For example, when the settlement status set in the field FBD of the order management data DAB found in ACT29 is not the state indicating "settlement-finished state," the processor 311 determines NO in ACT30 and the process proceeds to ACT32. When data set in the field FBB of the order management data DAB found in ACT29 is data determined to identify a seat in the store, the processor 311 determines NO in ACT29 and passes ACT30, and the process proceeds to ACT32. That is, when the order was made in the store and the settlement is not finished, the processor 311 causes the process to proceed to ACT32.

In ACT32, the processor 311 instructs the POS terminal 35 to perform payment processing for of the target order. In response to the instruction, the POS terminal 35 calculates a price for the target order and requires the delivery person or the customer to settle the price. When the settlement status is "non-settlement," the POS terminal 35 applies a settlement method as designated by the customer among settlement methods available at the store. When the settlement status already indicates a particular settlement method, the POS terminal 35 applies the settlement method. When the settlement ends, the POS terminal 35 notifies the order management server 1 of the end. When the settlement is finished by the delivery person or the user, the store staff hands the commodity to the delivery person or the user.

In ACT33, the processor 311 waits for an end notification. When the POS terminal 35 notifies of the end, the processor 311 determines YES and the process proceeds to ACT34. When ACT31 ends, the processor 311 causes the process to directly proceed to ACT34.

In ACT34, the processor 311 deletes the order management data DAB corresponding to the now-settled order from the order data area ARC. The processor 311 may store the deleted order management data DAB as settled sales data in an area other than the order data area ARC of the auxiliary storage unit 313 or any other storage device. Thereafter, the processor 311 returns the process to the standby state of ACT11 to ACT15.

In this way, the order management server 1 converts the first order receiving data transmitted in an individual format from a plurality of order receiving systems 2 into second order receiving data with a common format for a particular store and transmits the second order receiving data to the store system 3. Accordingly, in the store system 3, an order received from any of the order receiving systems 2 can be processed without considering which of the order receiving systems 2 sent the order. Thus, a load on the store is reduced when a plurality of order receiving agent services are used by the store.

The order management server 1 causes the format of the second order receiving data to be the same as the format of the order data without regard to the particular source of the order received in the store system 3. Therefore, the store system 3 can similarly process all orders received by the store system 3.

The store system 3 tracks whether the settlement of the order received by the order receiving agent service has been finished in the order receiving system 2. The store system 3 performs the settlement process when the completed order is handed over to a pickup customer or a delivery person of an order receiving agent service. Accordingly, even when the settlement for a plurality of order receiving agent service must be handled separately, necessary settlement can still be appropriately performed.

In the store system 3, whether an order initially received by an order receiving system 2 or in-person at the store, the store station 31 can still consistently manage the incoming order data using the same order management data DAB format. Accordingly, even when it is necessary to settle an order initially received by an order receiving agent service via an order receiving system 2, the processing and tracking can be performed similarly to an order received directly (e.g., via a handy terminal 32) by the store system 3. Thus, additional labor and effort for inputting content of an order into the POS terminal 35 is unnecessary.

The example embodiment can be modified in various aspects. For example, some or all of the described functions of the processors 11, 211, and 311 realized in the example embodiment through the information processing (e.g., software) can also or instead be realized by dedicated hardware that performs equivalent information processing, such as a logical circuit. Similarly, described functions may be realized by combinations of software and dedicated hardware circuits.

While certain embodiments of the present invention have been described, the embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. These embodiments and modifications fall within the scope of the inventions and fall within the invention described in the claims and their equivalents.

## Claims

1. An order management device, comprising:
a communication interface connectable to a store station device and a plurality of order receiving servers, each order receiving server being operated by an order receiving agent for sending one or more customer orders to a store operating the store station device; and
a processor configured to:
acquire first order data in a different format from each of the plurality of order receiving servers, the first order data including a list of item codes being ordered by a customer from the store;
associate the first order data to a first order identifier identifying the first order data in the respective order receiving server, a system identifier identifying which one of the plurality of order receiving servers sent the first order data, and a second order identifier identifying the first order data in the store station device;
extract data elements corresponding to the list of item codes included in the first order data;
generate second order data including the extracted data elements in a format matching a data format used by the store station device;
transmit the second order data to the store station device via the communication interface; and
after receiving a notice of completion of preparation work including the second order identifier from the store station device, transmit a preparation completion notice to the one of the order receiving servers which sent the first order data associated to the second order identifier.

2. The order management device according to claim 1, wherein the processor is further configured to extract a settlement status from the first order data.

3. The order management device according to claim 1 or 2, wherein the format of the second order data is identical to a format used by the store station device for managing in-store orders.

4. The order management device according to any one of claims 1 to 3, further comprising:
a storage unit configured to store a plurality of conversion tables, each conversion table permitting conversion of first order data from a particular one of the order receiving servers to second order data for the store station device.

5. The order management device according to any one of claims 1 to 4, wherein the communication interface is connectable to a plurality of store station devices.

6. An order processing system, comprising:
a plurality of store station devices configured to manage one or more customer orders, each store station device being operated by a different store;
a plurality of order receiving servers, each order receiving server being operated by an order receiving agent for sending one or more customer orders to at least one of the stores operating one of the plurality of store station devices;
the order management device according to any one of claims 1 to 5.

7. An order management method, comprising:
acquiring, via a communication interface of an order management server connected to a plurality of order receiving servers, first order data in a different format from each of the plurality of order receiving servers, the first order data including a list of item codes being ordered by a customer from a store via an order receiving agent operating one of the order receiving servers;
associating, in the order management server, the first order data to a first order identifier identifying the first order data in the respective order receiving server, a system identifier for identifying which one of the plurality of order receiving servers sent the first order data, and a second order identifier for identifying the first order data in a store station device in the store;
in the order management server, extracting data elements corresponding to the list of item codes included in the first order data, and then generating second order data including the extracted data elements in a format matching a data format used by the store station device;
transmitting the second order data to the store station device via the communication interface; and
after receiving a notice of completion of preparation work including the second order identifier from the store station device, transmitting a preparation completion notice to the one of the order receiving servers which sent the first order data associated to the second order identifier.

8. The order management method according to claim 7, further comprising:
at the order management server, extracting a settlement status from the first order data.

9. The order management method according to claim 7 or 8, wherein the format of the second order data is identical to a format used by the store station device for managing in-store orders.

10. The order management method according to any one of claims 7 to 9, further comprising:
storing a plurality of conversion tables, each conversion table permitting conversion of first order data from a particular one of the order receiving servers to second order data for the store station device.

11. The order management method according to any one of claims 7 to 10, wherein the store is a restaurant.

12. The order management method according to claim 11, wherein the notice of completion of preparation work is a notice indicating that the restaurant has completed cooking the list of items.
